# EUROPEAN PATENT APPLICATION

(11) **EP 4 485 107 A1**
(43) Date of publication of application: **01.01.2025**
(21) Application number: 24172133.1
(22) Date of filing: 24.04.2024
(51) Int. Cl.: G05B 23/02, G06N 3/045, G06N 20/20

(54) **APPARATUS, METHOD, AND PROGRAM FOR DETERMINING A STATE OF A TARGET EQUIPMENT**

(30) Priority: 29.06.2023 JP 2023106925
(71) Applicant: Yokogawa Electric Corporation, Tokyo 180-8750 (JP)
(72) Inventor: SHIMOKAWA, Tatsuya, Tokyo, 180-8750 (JP); YOSHIDA, Yusaku, Tokyo, 180-8750 (JP); UOMORI, Yoshio, Tokyo, 180-8750 (JP)
(74) Representative: Hoffmann Eitle

(57) **Abstract**

Provided is an apparatus including: an acquisition unit which acquires measurement data indicating a state of a target; a supply unit which supplies the measurement data acquired by the acquisition unit to a plurality of classification models respectively learned by learning data, which includes measurement data in a period in which the state of the target is normal, for periods different from each other, the plurality of classification models classifying measurement data as either normal or abnormal in response to the measurement data being input; and a determination unit which determines the state of the target as either normal or abnormal based on a plurality of classification results output from the plurality of classification models. Selected drawing: Fig. 1

## Description

### BACKGROUND

### 1. TECHNICAL FIELD

The present invention relates to an apparatus, a method, and a program.

### 2. RELATED ART

Patent Document 1 describes the presence or absence of abnormality of the equipment 10 may be detected by using a threshold value" (paragraph 0055), for example.

### Prior Art Document

### Patent Document

Patent Document 1: Japanese Patent Application Publication No. 2020-95425

### General Disclosure

A first aspect of the present invention provides an apparatus including: an acquisition unit which acquires measurement data indicating a state of a target; a supply unit which supplies the measurement data acquired by the acquisition unit to a plurality of classification models respectively learned by learning data, which includes measurement data in a period in which the state of the target is normal, for periods different from each other, the plurality of classification models classifying measurement data as either normal or abnormal in response to the measurement data being input; and a determination unit which determines the state of the target as either normal or abnormal based on a plurality of classification results output from the plurality of classification models.

The above-described apparatus may further include a learning processing unit which generates, in each period in which the state of the target is normal, a new classification model to be included in the plurality of classification models by learning processing using learning data including measurement data in the period acquired by the acquisition unit.

Any of the above-described apparatuses may further include a selection unit which selects the plurality of classification models from two or more classification models respectively learned by learning data, which includes measurement data in a period in which the state of the target is normal, for periods different from each other, the two or more classification models classifying measurement data as either normal or abnormal in response to the measurement data being input.

In the apparatus including the selection unit, the selection unit may select, as at least one of the plurality of classification models, at least one classification model learned by learning data including measurement data in a most recent period.

In any of the above-described apparatuses including the selection unit, the selection unit may select, as at least one of the plurality of classification models, at least one classification model designated by an operator among the two or more classification models. In the apparatus, the selection unit may fixedly select the at least one classification model designated by the operator as at least one of the plurality of classification models at each selection timing of the plurality of classification models.

In any of the above-described apparatuses, the determination unit may determine the state of the target as either normal or abnormal by taking a logical product of the plurality of classification results.

In any of the above-described apparatuses, the determination unit may determine the state of the target as either normal or abnormal by making a majority decision of the plurality of classification results.

In any of the above-described apparatuses, the determination unit may determine the state of the target as either normal or abnormal by adding a larger weight to a classification result of a classification model learned by learning data including measurement data in a more recent period among the plurality of classification models, and making a weighted majority decision of the plurality of classification results.

Any of the above-described apparatuses may further include a decision unit which decides a severity of an abnormal state of the target, based on a number of at least one time of consecutive determination that the state of the target is abnormal.

Any of the above-described apparatuses may further include a setting unit which sets, as measurement data to be included in new learning data, any one of measurement data in a period in which the severity decided by the decision unit is lower than a reference severity among the measurement data in each period acquired by the acquisition unit and supplied from the supply unit to the plurality of classification models, or measurement data obtained by excluding each piece of measurement data, which has caused consecutive abnormality determination until the severity decided by the decision unit reaches the reference severity, and each piece of measurement data, which is subsequent to the each piece of measurement data, which has caused consecutive abnormality determination until the severity reaches the reference severity, and has caused consecutive abnormality determination, among the measurement data acquired by the acquisition unit and supplied from the supply unit to the plurality of classification models. In any of the above-described apparatuses, each piece of learning data may include measurement data within periods of the same reference time width.

A second aspect of the present invention provides a method including: acquiring measurement data indicating a state of a target; supplying the measurement data acquired in the acquiring to a plurality of classification models respectively learned by learning data, which includes measurement data in a period in which the state of the target is normal, for periods different from each other, the plurality of classification models classifying measurement data as either normal or abnormal in response to the measurement data being input; and determining the state of the target as either normal or abnormal based on a plurality of classification results output from the plurality of classification models.

A third aspect of the present invention provides a program which causes a computer to function as: an acquisition unit which acquires measurement data indicating a state of a target; a supply unit which supplies the measurement data acquired by the acquisition unit to a plurality of classification models respectively learned by learning data, which includes measurement data in a period in which the state of the target is normal, for periods different from each other, the plurality of classification models classifying measurement data as either normal or abnormal in response to the measurement data being input; and a determination unit which determines the state of the target as either normal or abnormal based on a plurality of classification results output from the plurality of classification models.

Hereinafter, embodiments of the present invention will be described. However, the following embodiments are not for limiting the invention according to the claims. In addition, not all of the combinations of features described in the embodiments are imperative to the solving means of the invention.

### BRIEF DESCRIPTION OF THE DRAWINGS

Fig. 1 shows a system 1 according to an embodiment.
Fig. 2 shows an operation of an apparatus 3.
Fig. 3 shows a relationship among a determination result, a number of times of abnormality determination x, and severity.
Fig. 4 shows an example of a computer 2200 in which a plurality of aspects of the present invention may be entirely or partially embodied.

### DESCRIPTION OF EXEMPLARY EMBODIMENTS

Hereinafter, embodiments of the present invention will be described. However, the following embodiments are not for limiting the invention according to the claims. In addition, not all of the combinations of features described in the embodiments are imperative to the solving means of the invention.

### <1. System 1>

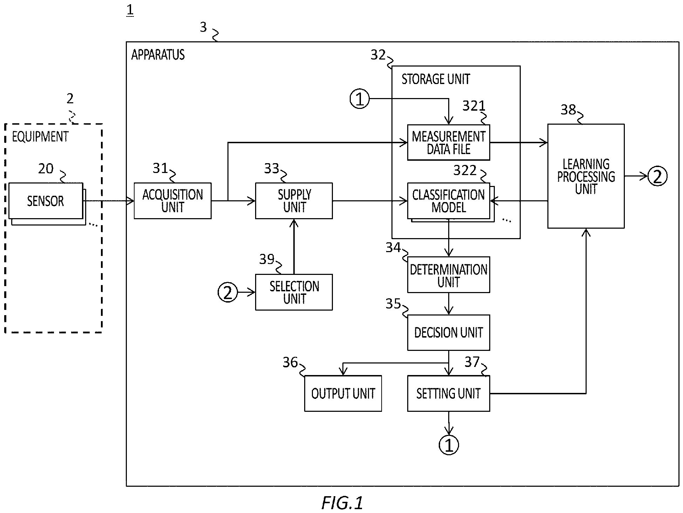

Fig. 1 shows a system 1 according to the present embodiment. The system 1 includes equipment 2 and an apparatus 3.

### <1.1. Equipment 2>

The equipment 2 may be an example of a target, and the state thereof may be monitored by the apparatus 3. The equipment 2 may be an installation, an apparatus, or the like equipped with one or more instruments (not shown). For example, the equipment 2 may be a plant or may be a complex apparatus in which a plurality of instruments are combined. Examples of the plant include: in addition to an industrial plant such as a chemical plant and a biotechnology plant, a plant for managing and controlling a well site such as a gas field or an oil field and its surrounding area; a plant for managing and controlling power generation such as hydroelectric, thermal, or nuclear power generation; a plant for managing and controlling energy harvesting from solar power, wind power, or the like; a plant for managing and controlling water and sewerage, dams, or the like; and others. The instrument equipped in the equipment 2 is a tool, machinery, or an apparatus, and may be a so-called field instrument. For example, the instrument may be a sensor instrument such as a pressure gauge, a flow meter, or a temperature sensor, a valve instrument such as a flow control valve or an on/off valve, or an actuator instrument such as a fan or a motor.

The equipment 2 may be provided with one or more sensors 20. Each sensor 20 may measure a physical quantity indicating the state of the equipment 2. The physical quantity to be measured may be, for example, a pressure, a temperature, a pH, a speed, a flow rate, or the like, or may be a yield of a product by the equipment 2, a proportion of impurities mixed in the product, or the like. Each sensor 20 may be of different types from each other, or at least some (two or more) of the sensors 20 may be of the same type. Each sensor 20 may supply a measurement value of a physical quantity or the like to the apparatus 3. Communication between the sensor 20 and the apparatus 3 may be performed by, for example, a wireless communication protocol of International Society of Automation (ISA), and may be performed by ISA 100, Highway Addressable Remote Transducer (HART) (registered trademark), BRAIN (registered trademark), FOUNDATION Fieldbus, PROFIBUS, or the like as an example.

### <1.2. Apparatus 3>

The apparatus 3 includes an acquisition unit 31, a storage unit 32, a supply unit 33, a determination unit 34, a decision unit 35, an output unit 36, a setting unit 37, a learning processing unit 38, and a selection unit 39.

### <1.2.1. Acquisition unit 31>

The acquisition unit 31 acquires measurement data indicating the state of the equipment 2. The acquisition unit 31 may acquire measurement data including one type of measurement value measured by a single sensor 20, or may acquire measurement data including a plurality of types of measurement values measured at the same (or substantially the same) timing by a plurality of sensors 20. A timestamp indicating a measurement timing by the sensor 20 or an acquisition timing by the acquisition unit 31 may be added to the measurement data. The acquisition unit 31 may supply the acquired measurement data to the storage unit 32 and cause the measurement data to be stored in a measurement data file 321 described later. The acquisition unit 31 may supply the acquired measurement data to the supply unit 33.

### <1.2.2. Storage unit 32>

The storage unit 32 stores various types of information. For example, the storage unit 32 may store the measurement data file 321 and a plurality of classification models 322.

### <1.2.2 (1). Measurement data file 321>

The measurement data file 321 stores the measurement data supplied from the acquisition unit 31. Note that in each piece of measurement data in the measurement data file 321, the timestamp of the measurement data may indicate which period among a plurality of periods different for each reference time width (one week as an example in the present embodiment) the measurement data belongs to. For example, a timestamp of January 1, 2023 may indicate that the measurement data belongs to the first week period of 2023, and a timestamp of January 8, 2023 may indicate that the measurement data belongs to the second week period of 2023.

### <1.2.2 (2). Classification model 322>

Each classification model 322 classifies the measurement data as either normal or abnormal in response to the input of the measurement data. Each classification model 322 may output a classification result binarized with a value indicating normality and a value indicating abnormality. Each classification model 322 may output the classification result to the determination unit 34.

Each classification model 322 may have been learned by learning data for each of periods different from each other, the learning data including measurement data in a period in which the state of the equipment 2 is normal. The measurement data in the period in which the state of the equipment 2 is normal may be measurement data including a measurement value measured in the period in which the state of the equipment 2 is normal. The period in which the state of the equipment 2 is normal may be a period in which it is determined by at least one of an operator or the determination unit 34 described later that the state of the equipment 2 is normal. The learning data for each of periods may include measurement data measured at two or more timings (as an example, measurement data in chronological order). In the present embodiment, as an example, the learning data for each of periods may include measurement data within periods of the same time width (also referred to as a reference time width). As an example, the reference time width may be one week. The periods different from each other may be periods in which at least one of the start or the end is different, and in the present embodiment, as an example, may be periods not including a common time point.

In response to to-be-classified measurement data satisfying a condition derived from the feature of the measurement data included in the learning data, each classification model 322 may classify the to-be-classified measurement data as normal, and in response to to-be-classified measurement data not satisfying the condition, it may classify the to-be-classified measurement data as abnormal. The feature of the measurement data included in the learning data may be a value indicating the distribution of each type of measurement value, and may be, as an example, at least one of a maximum value, a minimum value, an average value, a median value, a mode value, a standard deviation, or a variance, or may be a value indicating a waveform of a temporal measurement value. The condition derived from the feature of the measurement data may be, as an example, that the measurement value of the to-be-classified measurement data falls within a range of the minimum value to the maximum value, or may be that the to-be-classified measurement value falls within a range of (average value - 3σ) to (average value + 3σ) (where σ represents a standard deviation).

Each classification model 322 may be learned by unsupervised learning using only learning data including measurement data classified in advance as normal measurement data, and may be generated by the same learning algorithm. In the present embodiment, as an example, each classification model 322 may be generated by a learning algorithm of one-class support vector machine (SVM). Each classification model 322 may be learned by using separate learning data.

At least one of the classification models 322 stored in the storage unit 32 may be generated by learning processing by the learning processing unit 38 described later. At least one of the classification models 322 stored in the storage unit 32 may be a classification model 322 (also referred to as a to-be-used classification model 322) used for determination by the determination unit 34. Although details will be described later, the to-be-used classification model 322 may be selected by the selection unit 39.

### <1.2.3. Supply unit 33>

The supply unit 33 supplies, to one or more classification models 322, the measurement data acquired by the acquisition unit 31. The supply unit 33 may supply the measurement data to each to-be-used classification model 322. Accordingly, the classification result may be output to the determination unit 34 from each to-be-used classification model 322 to which the measurement data has been supplied.

### <1.2.4. Determination unit 34>

The determination unit 34 determines the state of the equipment 2 as either normal or abnormal based on a plurality of classification results output from a plurality of classification models 322. The determination unit 34 may make a determination by acquiring the classification result from each to-be-used classification model 322.

The determination unit 34 may determine the state of the equipment 2 as either normal or abnormal by taking a logical product of the plurality of classification results. In the present embodiment, as an example, the determination unit 34 may take a logical product of a plurality of classification results by setting, as true, a classification result indicating that the measurement data is abnormal and, as false, a classification result indicating that the measurement data is normal, and in other words, the determination 34 unit may consider the state of the equipment 2 as abnormal in response to the measurement data being classified as abnormal in all the classification results and consider the state of the equipment 2 as normal in response to the measurement data being classified as normal in at least one classification result. The determination unit 34 may supply the determination result to the decision unit 35.

### <1.2.5. Decision unit 35>

The decision unit 35 decides the severity of the abnormal state of the equipment 2 based on the number of times of consecutive determination that the state of the equipment 2 is abnormal (also referred to as the number of times of consecutive abnormality determination). The consecutive determination as abnormality may mean that the determination result indicating abnormality continues without interposing the determination result indicating normality.

The decision unit 35 may decide the severity to be higher as the number of times of consecutive abnormality determination is larger. For example, when the number of times of consecutive abnormality determination is "x", a first reference number of times is "a" (where a is a natural number of 2 or more), and a second reference number of times is "b" (where b is a natural number of a < b), the decision unit 35 may decide the severity as a low level when x < a, decide the severity as a medium level (also referred to as a caution level) when a ≤ x < b, and decide the severity as a high level (also referred to as a warning level) when b ≤ x. As an example, the first reference number of times a may be 5, and the second reference number of times b may be 10.

The decision unit 35 may decide the severity each time the determination result is supplied from the determination unit 34. The decision unit 35 may supply, to the output unit 36 and the setting unit 37, the decided severity together with the determination result by the determination unit 34.

### <1.2.6. Output unit 36>

The output unit 36 outputs the determination result by the determination unit 34 and the decision result by the decision unit 35. The output unit 36 may cause a display apparatus (not shown) to display the determination and decision results.

### <1.2.7. Setting unit 37>

The setting unit 37 sets, as measurement data to be included in new learning data (also referred to as measurement data for learning), measurement data in a period in which the severity decided by the decision unit 35 is lower than a reference severity, among the measurement data in each period acquired by the acquisition unit 31 and supplied from the supply unit 33 to the to-be-used classification model 322. The measurement data in the period in which the severity decided by the decision unit 35 is lower than the reference severity among the measurement data in each period supplied to the to-be-used classification model 322 may be measurement data in a period in which the severity decided by the decision unit 35 is maintained lower than the reference severity among the measurement data for each period. The description that the severity is lower than the reference severity may mean that the equipment 2 is normal, or may mean that the equipment 2 is abnormal but the severity of the abnormality is less than the reference severity. In the present embodiment, as an example, the reference severity may be at the high level, that is, the warning level.

Note that, in the period in which the severity is lower than the reference severity, even when the state of the equipment 2 is determined as abnormal, the abnormal state occurs only temporarily and sporadically, and thus, it is considered that the measurement data is classified as abnormal due to noise, drift, or the like of the measurement value although the equipment 2 is originally normal. The setting unit 37 may set, as the measurement data for learning, the measurement data in the period in which the equipment 2 is originally normal as described above.

The setting unit 37 may add a label indicating the measurement data for learning (also referred to as a learning label) to the measurement data in each period in which the severity is lower than the reference severity among the measurement data in each period in the measurement data file 321. In the present embodiment, as an example, the setting unit 37 may determine whether the decided severity is below the high level, each time the decision result of the severity is supplied from the decision unit 35, and add the learning label to measurement data in a period in which the severity is maintained below the high level. In response to adding the learning label to the measurement data, the setting unit 37 may supply a notification to that fact to the learning processing unit 38.

### <1.2.8. Learning processing unit 38>

In each period in which the state of the equipment 2 is normal, the learning processing unit 38 generates a new classification model 322 to be included in the plurality of classification models 322 stored in the storage unit 32 by learning processing using the learning data including the measurement data in the period acquired by the acquisition unit 31. The description of generating the new classification model 322 in each period in which the state of the equipment 2 is normal may mean generating the new classification model 322 for each period in which the state of the equipment 2 is normal.

In response to receiving, from the setting unit 37, the notification that the learning label is added to the measurement data, the learning processing unit 38 may generate the new classification model 322 by using the learning data including the measurement data in the most recent period among the measurement data to which the learning label is added in the measurement data file 321. Therefore, when the learning labels are added to measurement data of a plurality of consecutive periods, the new classification model 322 may be generated each time each period elapses.

The learning processing unit 38 may generate the classification model 322 by unsupervised learning using only learning data including measurement data classified in advance by adding the learning label, and in the present embodiment, as an example, the classification model 322 may be generated by the learning algorithm of one-class SVM. In response to generating the classification model 322, the learning processing unit 38 may supply, to the selection unit 39, a notification indicating the fact.

### <1.2.9. Selection unit 39>

The selection unit 39 selects the to-be-used classification model 322 from the classification models 322 stored in the storage unit 32. When two or more classification models 322 are stored in the storage unit 32, the selection unit 39 may select a plurality of to-be-used classification models 322, from the two or more classification models 322. When a reference number (as an example, 4) or more classification models 322 are stored in the storage unit 32, the selection unit 39 may select, as the to-be-used classification model 322, the reference number of classification models 322.

The selection unit 39 may select, as at least one of the to-be-used classification models 322, at least one classification model 322 learned by learning data including measurement data in the most recent period. The selection unit 39 may select each of the to-be-used classification models 322 in response to receiving, from the learning processing unit 38, a notification indicating that the classification model 322 is newly generated. The selection unit 39 may supply the measurement data from the supply unit 33 to the to-be-used classification model 322 by supplying, to the supply unit 33, the identification information of the to-be-used classification model 322.

According to the apparatus 3 described above, the state of the equipment 2 is determined as normal or abnormal, based on a plurality of classification results of normality or abnormality for the measurement data, the classification results being output when the measurement data is supplied to the classification model 322. Therefore, unlike a case where an index value indicating a degree of normality or abnormality with respect to the measurement data is acquired, and determination is performed by comparing the index value with a threshold value, it is possible to eliminate the trouble of an operator setting the threshold value by trial and error and to prevent the determination result from being different depending on the magnitude of the threshold value. In addition, since a plurality of classification models 322 are used which are learned by the learning data, which includes the measurement data in the period in which the state of the equipment 2 is normal, for each of periods different from each other, it is possible to acquire a highly accurate classification result as compared with a case where a single classification model is used which is learned by the learning data including respective pieces of measurement data in a plurality of periods in which the state of the equipment 2 is normal. That is, even when the state of the equipment 2 is normal, the tendency of the measurement value may change, for example, in a case where the measurement value drifts, in a case where the state of the equipment 2 changes, in a case where the operation method of the equipment 2 changes, or the like. In addition, even when the state of the equipment 2 is normal, the measurement value may include various noises. As described above, in a case where the tendency of the measurement value changes or in a case where the measurement value includes various noises, when the single classification model is used which is learned by the learning data including respective pieces of measurement data in the plurality of periods, the to-be-classified measurement data can be classified as normal measurement data when the to-be-classified measurement data is included as a whole in a normal range in the plurality of periods even in a case where the to-be-classified measurement data deviates from a normal range in an individual period. On the other hand, when the plurality of classification models 322 are used which are learned by the learning data for each of periods different from each other, the measurement data can be correctly classified as abnormal measurement data by each classification model 322 when the to-be-classified measurement data deviates from the normal range in each period. Then, by performing determination by using a plurality of such classification results, it is possible to acquire a highly accurate determination result.

In addition, since the logical product of the plurality of classification results by the plurality of classification models 322 is taken and the state of the equipment 2 is determined as normal or abnormal, it is possible to acquire a highly accurate determination result as compared with a case where the determination is performed with a logical sum.

In addition, in each period in which the state of the equipment 2 is normal, a new classification model 322 is generated by the learning processing using the learning data including the measurement data in the period. Therefore, since the classification model 322 according to the change in the tendency of the measurement data can be sequentially generated and used for determination, a highly accurate determination result can be acquired.

In addition, a plurality of to-be-used classification models 322 are selected from two or more classification models 322 stored in the storage unit 32. Therefore, an appropriate classification model 322 can be appropriately selected and used for determination.

In addition, since one classification model 322 learned by the learning data including the measurement data in the most recent period is selected as at least one of the to-be-used classification models 322, the classification model 322 according to the most recent state of the equipment 2 can be used for determination.

In addition, since the severity of the abnormal state of the equipment 2 is decided based on the number of times of consecutive determination that the state of the equipment 2 is abnormal, the severity of the state abnormality can be acquired.

In addition, among the measurement data in each period supplied to the plurality of classification models 322, measurement data in a period in which the severity is lower than the reference severity is set as measurement data to be included in new learning data. Therefore, since the measurement data in the period in which the equipment 2 is originally normal can be set for learning, the classification model 322 is generated by using new learning data including such measurement data, thereby acquiring the classification model 322 which can correctly classify the originally normal measurement data as normal.

### <2. Operation of apparatus 3>

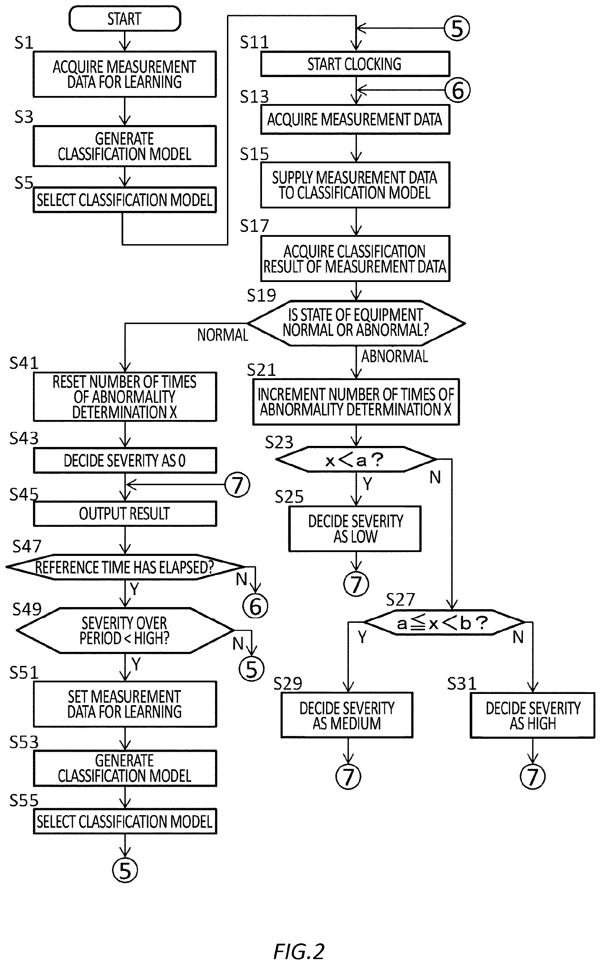

Fig. 2 shows the operation of the apparatus 3. The apparatus 3 supports the monitoring of the equipment 2 by performing processing of steps S1 to S55. Note that, in the present embodiment, as an example, description will be given on the assumption that the classification model 322 is not stored in the storage unit 32 at the starting time point of the present operation.

In step S1, the acquisition unit 31 acquires measurement data in a period in which the state of the equipment 2 is normal (as an example, a period of the reference time width). In the present step, the period in which the state of the equipment 2 is normal may be a period in which the state of the equipment 2 is determined as normal by the operator, and as an example, when it is determined by the operator that the state of the equipment 2 is normal over the period of the reference time width, the period may be the relevant period, and when it is determined by the operator that the state of the equipment 2 is normal over a period longer than the reference time width, the period may be the period of the reference time width included in the relevant period. The acquired measurement data may include a measurement value of a period in which the state of the equipment 2 is determined as normal by the operator. The acquired measurement data may be for learning the classification model 322, and a learning label may be added in advance. The acquisition unit 31 may acquire, as measurement data, measurement values from one or more sensors 20. The acquisition unit 31 may perform so-called preprocessing on the acquired measurement data. As an example, the acquisition unit 31 may calculate a moving average of measurement values from a plurality of pieces of acquired most recent measurement data and use the moving average as the measurement value of the acquired measurement data, or may remove an outlier detected by statistical analysis using past measurement data among the measurement values of the acquired measurement data.

In step S3, the learning processing unit 38 generates a new classification model 322 by learning processing using learning data including the measurement data acquired in step S1. The learning processing unit 38 may store the generated new classification model 322 in the storage unit 32.

In step S5, the selection unit 39 selects, as the to-be-used classification model 322, the classification model 322 generated in step S3. Accordingly, the measurement data may be supplied to the selected classification model 322 in step S15 described later.

In step S11, the supply unit 33 starts clocking for the reference time width. Accordingly, a new period may be started.

In step S13, the acquisition unit 31 acquires measurement data indicating the state of the equipment 2. The acquisition unit 31 may acquire, as the measurement data, measurement values from one or more sensors 20. The acquisition unit 31 may perform preprocessing on the acquired measurement data in a similar manner to that in step S1 described above.

In step S15, the supply unit 33 supplies the measurement data acquired in step S13 to at least one classification model 322. Accordingly, a classification result obtained by classifying the measurement data as normal or abnormal may be output from each classification model 322 to which the measurement data is supplied.

The supply unit 33 may supply the measurement data to each to-be-used classification model 322 selected by the selection unit 39. As an example, when only a single classification model 322 is selected as a use target in step S5 described above, the supply unit 33 may supply the measurement data to the single classification model 322. When a plurality of classification models 322 is selected as the use target in step S55 described later, the supply unit 33 may supply the measurement data to each of the selected classification models 322. When step S15 is performed for the second time or later, the processing of step S15 may be executed at reference intervals (as an example, 30 minutes).

In step S17, the determination unit 34 acquires the classification result of the measurement data from each to-be-used classification model 322.

In step S19, the determination unit 34 determines the state of the equipment 2 as either normal or abnormal based on each classification result acquired in step S17.

When only a single classification result is acquired from the single classification model 322 in step S17 described above, the determination unit 34 may determine the state of the equipment 2 as normal or abnormal based on the single classification result. As an example, the determination unit 34 may determine that the state of the equipment 2 is normal, based on the classification result that the measurement data is normal, and may determine that the state of the equipment 2 is abnormal, based on the classification result that the measurement data is abnormal.

When a plurality of classification results are acquired from the plurality of classification models 322 in step S17 described above, the determination unit 34 may determine the state of the equipment 2 as either normal or abnormal based on the plurality of classification results. The determination unit 34 may determine the state of the equipment 2 as either normal or abnormal by taking the logical product of the plurality of classification results. If it is determined in step S19 that the equipment 2 is normal (step S19; normal), the processing may proceed to step S41. If it is determined in step S19 that the equipment 2 is abnormal (step S19; abnormal), the processing may proceed to step S21.

In step S21, the decision unit 35 increments a number of times of consecutive abnormality determination x. When step S21 is performed first, the number of times of consecutive abnormality determination may be incremented from an initial value of 0 to 1.

In step S23, the decision unit 35 determines whether the number of times of consecutive abnormality determination x is less than the first reference number of times a, that is, x < a. If it is determined that x < a (step S23; Yes), the processing may proceed to step S25. If it is determined that x < a is not satisfied, that is, a ≤ x is satisfied (step S23; No), the processing may proceed to step S27.

In step S25, the decision unit 35 decides the severity of the abnormal state of the equipment 2 as the low level. When the processing of step S25 is completed, the processing may proceed to step S45 described later.

In step S27, the decision unit 35 determines whether the number of times of consecutive abnormality determination x is equal to or larger than the first reference number of times a and less than the second reference number of times b, that is, a ≤ x < b. If it is determined that a ≤ x < b (step S27; Yes), the processing may proceed to step S29. If it is determined that a ≤ x < b is not satisfied, that is, b ≤ x is satisfied (step S27; No), the processing may proceed to step S31.

In step S29, the decision unit 35 decides the severity of the abnormal state of the equipment 2 as the medium level, that is, the caution level. When the processing of step S29 is completed, the processing may proceed to step S45 described later.

In step S31, the decision unit 35 decides the severity of the abnormal state of the equipment 2 as the high level, that is, the warning level. When the processing of step S31 is completed, the processing may proceed to step S45 described later.

In step S41, the decision unit 35 resets the number of times of consecutive abnormality determination x to 0. In step S43, the decision unit 35 decides the severity of the abnormal state of the equipment 2 to be 0.

In step S45, the output unit 36 outputs the determination result by the determination unit 34 in step S19 and the decision result by the decision unit 35 in step S25, S29, S31, or S43. The output unit 36 may cause a display apparatus (not shown) to display the determination and decision results.

In step S47, the supply unit 33 determines whether the clocking for the reference time width has been completed, that is, whether a period of the reference time width (one week as an example in the present embodiment) has elapsed from step S11 described above. If it is determined that the period of the reference time width has elapsed (step S47; Yes), the processing may proceed to step S49. If it is determined that the period of the reference time width has not elapsed (step S47; No), the processing may proceed to step S13.

In step S49, the setting unit 37 determines whether in the most recent period, the severity in the period is maintained below the reference severity (the high level as an example in the present embodiment). If it is determined that the severity is not maintained below the high level (step S49; No), the processing may proceed to step S11 described above. If it is determined that the severity is maintained below the high level (step S49; Yes), the processing may proceed to step S51.

In step S51, the setting unit 37 sets the measurement data in the most recent period as the measurement data to be included in the new learning data. In the present embodiment, as an example, the setting unit 37 may set, as the measurement data to be included in the new learning data, the measurement data in the period in which the determination that the state of the equipment 2 is normal is maintained in step S19. In addition to this, when the severity is decided as the low level, the medium level, or 0 in steps S25, S29, and S43, the setting unit 37 may set, as the measurement data to be included in the new learning data, the measurement data in the period in which the severity is maintained below the high level. The setting unit 37 may add a learning label to the measurement data in the most recent period stored in the measurement data file 321.

In step S53, the learning processing unit 38 generates a new classification model 322 by learning processing using learning data including the measurement data in the most recent period to which the learning label is added. The learning processing unit 38 may additionally store the generated new classification model 322 in the storage unit 32.

In step S55, the selection unit 39 selects the to-be-used classification model 322 from the plurality of classification models 322 stored in the storage unit 32. Accordingly, the measurement data may be supplied to each selected to-be-used classification model 322 in step S15 described above.

When only a number, which is equal to or less than the reference number, of classification models 322 are stored in the storage unit 32, the selection unit 39 may select each classification model 322 as the to-be-used classification model 322. When a number, which is larger than the reference number, of classification models 322 are stored in the storage unit 32, the selection unit 39 may select, as the to-be-used classification models 322, the reference number of the classification models 322 from these classification models 322. For example, the selection unit 39 may select, as the to-be-used classification model 322, at least one latest classification model 322 generated in step S53 among the classification models 322 in the storage unit 32. Accordingly, the measurement data may be classified by all the classification models 322 until the number of classification models 322 in the storage unit 32 reaches the reference number, and after the number of classification models 322 in the storage unit 32 exceeds the reference number, the measurement data may be classified by the selected reference number of classification models 322. The selection unit 39 may sequentially delete the previously generated classification model 322 according to the capacity of the storage unit 32. When the processing of step S55 is completed, the processing may proceed to step S11 described above.

### <3. Operation example>

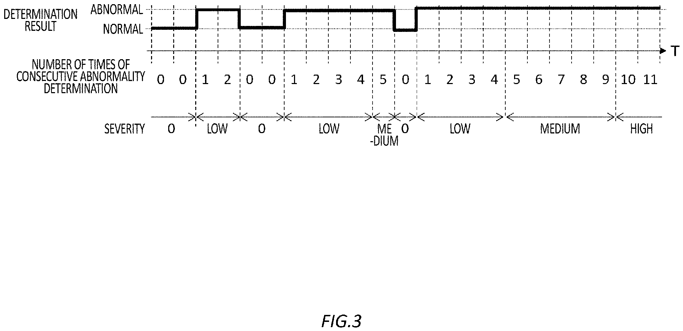

Fig. 3 shows a relationship among the determination result, the number of times of consecutive abnormality determination x, and the severity of the abnormality. Note that in the present drawing, a horizontal axis represents time, and a vertical broken line represents a period break.

As shown in the present drawing, the number of times of consecutive abnormality determination x is incremented in response to continuation of the determination result indicating that the state of the equipment 2 is abnormal, and is reset according to the determination result indicating that the state of the equipment 2 is normal. In addition, the severity is 0 when the number of times of consecutive abnormality determination x is 0, the severity is at the low level when the number of times of consecutive abnormality determination x is 1 to 4, the severity is at the medium level (that is, the caution level) when the number of times of consecutive abnormality determination x is 5 to 9, and the severity is at the high level (that is, the warning level) when the number of times of consecutive abnormality determination x is 10 or more.

### <4. Modifications>

Note that, in the above-described embodiment, the description has been given assuming that the selection unit 39 selects, as at least one of the to-be-used classification models 322, at least one classification model 322 learned by the learning data including the measurement data in the most recent period, but, in addition to or instead of this, at least one classification model 322 designated by the operator among two or more classification models 322 stored in the storage unit 32 may be selected as at least one of the to-be-used classification models 322. Accordingly, an arbitrary classification model 322 can be selected by the operator and used for determination. Therefore, when the equipment 2 is currently normal, the classification model 322 in which the current measurement data is determined as normal can be selected and used for determination.

In addition, a classification model exhibiting high classification accuracy in a test using normal measurement data and abnormal measurement data can be selected in advance and used for determination. The selection unit 39 may fix the classification model 322 as the to-be-used classification model 322 in response to the classification model 322 being designated by the operator, and may automatically select the classification model 322 in the processing of step S55.

In addition, the description has been given assuming that the determination unit 34 determines the state of the equipment 2 as either normal or abnormal by taking the logical product of the plurality of classification results from the plurality of to-be-used classification models 322, but a majority decision of the plurality of classification results may be made to determine the state of the equipment 2 as either normal or abnormal. In addition to this, the determination unit 34 may determine the state of the equipment 2 as either normal or abnormal by adding a larger weight to the classification result of the classification model 322 learned by learning data including measurement data in a more recent period among the plurality of to-be-used classification models 322, and making a weighted majority decision of the plurality of classification results. Adding a weight to the classification result and making a weighted majority decision may be increasing the number of each classification result by the weight and making a majority decision. As an example, a classification result by the classification model 322 learned by learning data in the most recent period is set as a first classification result, a classification result by the classification model 322 learned by learning data in the second most recent period is set as a second classification result, and a classification result by the classification model 322 learned by learning data in the third most recent period is set as a third classification result. In addition, weights for the first to third classification results are defined as w1 to w3 (where w1 > w2 > w3), respectively. In this case, the determination unit 34 may make a majority decision with the first classification result considered as the classification results of 1×w1 counts, the second classification result considered as the classification results of 1×w2 counts, and the third classification result considered as the classification results of 1×w3 counts. Accordingly, a newer classification model 322, that is, the classification model 322 according to the state of the equipment 2 closer to the latest has a larger influence on the determination result, so that the determination result according to the transition of the state of the equipment 2 can be acquired.

In addition, the description has been given assuming that the determination unit 34 performs determination based on the plurality of classification results output from the plurality of classification models 322 generated by a common learning algorithm, but the determination may be performed based on a classification result output from a classification model generated by another known learning algorithm in addition to the plurality of classification results output from the plurality of classification models 322.

In addition, the description has been given assuming that the learning processing unit 38 generates the classification model 322 in response to receiving, from the setting unit 37, the notification that the learning label is added to the measurement data, but the classification model 322 may be generated according to a predetermined schedule, or the classification model 322 may be generated according to an instruction of the operator. The learning processing unit 38 may generate the classification model 322 by using learning data unused for the learning processing among the learning data for each period in which the state of the equipment 2 is normal.

In addition, the description has been given assuming that the apparatus 3 includes the storage unit 32, the decision unit 35, the output unit 36, the setting unit 37, the learning processing unit 38, and the selection unit 39, but the apparatus 3 may not include any of these. When the apparatus 3 does not include the storage unit 32, the measurement data file 321 and the classification model 322 may be stored in a storage apparatus externally connected to the apparatus 3. When the apparatus 3 does not include the decision unit 35, the output unit 36 may output the determination result by the determination unit 34 without outputting the decision result by the decision unit 35, and the setting unit 37 may set, as the measurement data to be included in the new learning data, measurement data in a period in which the equipment 2 is determined as normal by the determination unit 34. When the apparatus 3 does not include the output unit 36, the determination unit 34 and the decision unit 35 may store the determination or decision result in association with the corresponding measurement data in the measurement data file 321. When the apparatus 3 does not include the setting unit 37, the learning processing unit 38 may generate the classification model 322 by using measurement data within the period selected by the operator among the measurement data for each period. When the apparatus 3 does not include the learning processing unit 38, the determination unit 34 may perform determination by using only the classification model 322 stored in the storage unit 32 by default. When the apparatus 3 does not include the selection unit 39, the determination unit 34 may perform determination by using each classification model 322 in the storage unit 32.

In addition, the description has been given assuming that each piece of learning data includes the measurement data within the periods of the same reference time width, but the learning data may include measurement data within periods of time widths different from each other. In this case, the operator may arbitrarily set the start and the end of each period. In addition, in the processing of step S1 described above, the acquisition unit 31 may acquire measurement data in a period of an arbitrary time width in which the state of the equipment 2 is normal, and as an example, may acquire measurement data in a period of an arbitrary time width in which the state of the equipment 2 is determined as normal by the operator.

In addition, the description has been given assuming that the setting unit 37 sets, as the measurement data for learning, the measurement data in the period in which the severity decided by the decision unit 35 is maintained lower than the reference severity (as an example, the high level), that is, excludes the period in which the severity is equal to or higher than the reference severity and sets, as the measurement data for learning, the measurement data in the remaining period, but the setting unit 37 may set the measurement data for learning by another mode. For example, when the number of times of consecutive abnormality determination is equal to or larger than the above-described second reference number of times "b" (that is, the reference number of times for deciding the severity as the high level), the setting unit 37 may exclude the measurement data, which has caused the abnormality determination for the "b"-th or later, among the measurement data acquired by the acquisition unit 31 and supplied from the supply unit 33 to the plurality of classification models 322 and set the remaining measurement data as the measurement data for learning, or may set, as the measurement data for learning, measurement data obtained by excluding each piece of measurement data which has caused consecutive abnormality determination until the severity decided by the decision unit 35 becomes at the high level (that is, each piece of measurement data which has caused the first abnormality determination to the "b"-th abnormality determination), and each piece of measurement data which is subsequent to the measurement data and has caused consecutive abnormality determination (that is, each piece of measurement data which has caused consecutive abnormality determination for the "b+1"-th time or later) among the measurement data acquired by the acquisition unit 31 and supplied from the supply unit 33 to the plurality of classification models 322. In these cases, the measurement data for learning may include measurement data within periods of time widths different from each other.

In addition, the target to be monitored by the apparatus 3 has been described as the equipment 2, but the target may be an instrument (the actuator instrument as an example) provided in the equipment 2.

In addition, the description has been given assuming that the classification model 322 is not stored in the storage unit 32 at the starting time point of the operation of Fig. 2, but one or more classification models 322 may be stored in advance. In this case, the operation may start from step S11 in a state where each classification model 322 in the storage unit 32 is selected as the to-be-used classification model 322 in advance by the selection unit 39. In addition, in step S55, the selection unit 39 may select the classification model 322 generated by the learning processing unit 38, or may select the classification model 322 stored in advance in the storage unit 32.

In addition, in the operation of Fig. 2, the description has been given assuming that the new classification model 322 generated by the learning processing unit 38 is stored in the storage unit 32, but a new classification model 322 generated by the learning processing similar to that of the learning processing unit 38 in an external apparatus may be stored in the storage unit 32. In this case, the selection unit 39 may select any classification model 322 as the to-be-used classification model 322 in response to the classification model 322 being stored in the storage unit 32.

In addition, various embodiments of the present invention may be described with reference to flowcharts and block diagrams whose blocks may represent (1) steps of processes in which operations are executed or (2) sections of apparatuses responsible for executing operations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits, and may include integrated circuits (IC) and/or discrete circuits. The programmable circuitry may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

A computer readable medium may include any tangible device that can store instructions to be executed by a suitable device, and as a result, the computer readable medium having instructions stored thereon includes an article of manufacture including instructions which can be executed in order to create means for performing operations specified in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disc (DVD), a Blu-ray (registered trademark) disc, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like, and a conventional procedural programming language such as a "C" programming language or a similar programming language.

Computer-readable instructions may be provided to a processor of a general-purpose computer, special purpose computer, or other programmable data processing apparatuses, or to programmable circuitry, locally or via a local area network (LAN), wide area network (WAN) such as the Internet, or the like, so that the computer-readable instructions are executed to create means for performing operations specified in the flowcharts or block diagrams. Examples of the processor include a computer processor, a processing unit, a microprocessor, a digital signal processor, a controller, a microcontroller, and the like.

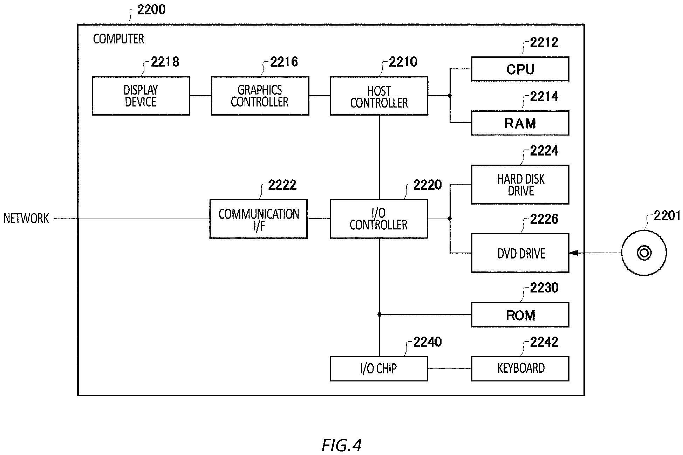

Fig. 4 illustrates an example of a computer 2200 in which a plurality of aspects of the present invention may be entirely or partially embodied. A program installed in the computer 2200 may cause the computer 2200 to function as an operation associated with the apparatuses according to the embodiments of the present invention or as one or more sections of the apparatuses, or may cause the operation or the one or more sections to be executed, and/or may cause the computer 2200 to execute a process according to the embodiments of the present invention or a stage of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, an RAM 2214, a graphic controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as an ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphic controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

The program is provided by a computer readable medium such as the DVD-ROM 2201 or the IC card. The program is read from a computer readable medium, installed in the hard disk drive 2224, the RAM 2214, or the ROM 2230 which are also examples of the computer readable medium, and executed by the CPU 2212. The information processing written in these programs is read by the computer 2200 and provides cooperation between the programs and the above-described various types of hardware resources. The apparatus or method may be configured by implementing operations or processings of information according to use of the computer 2200.

For example, in a case where communication is performed between the computer 2200 and an external device, the CPU 2212 may execute a communication program loaded in the RAM 2214 and instruct the communication interface 2222 to perform communication processing based on a processing written in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgment, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The programs or software modules described above may be stored in a computer readable medium on or near the computer 2200. In addition, a recording medium such as a hard disk or an RAM provided in a server system connected to a dedicated communication network or the Internet can be used as a computer readable medium, thereby providing a program to the computer 2200 via the network.

While the present invention has been described by way of the embodiments, the technical scope of the present invention is not limited to the above described embodiments. It is apparent to persons skilled in the art that various alterations or improvements can be made to the above described embodiments. It is also apparent from description of the claims that the embodiments to which such alterations or improvements are made can be included in the technical scope of the present invention.

It should be noted that the operations, procedures, steps, stages, and the like of each process performed by an apparatus, system, program, and method shown in the claims, embodiments, or diagrams can be realized in any order as long as the order is not indicated by "prior to," "before," or the like and as long as the output from a previous process is not used in a later process. Even if the operation flow is described using phrases such as "first" or "next" for the sake of convenience in the claims, specification, or drawings, it does not necessarily mean that the process must be performed in this order.

### EXPLANATION OF REFERENCES

1: system;
2: equipment;
3: apparatus;
20: sensor;
31: acquisition unit;
32: storage unit;
33: supply unit;
34: determination unit;
35: decision unit;
36: output unit;
37: setting unit;
38: learning processing unit;
39: selection unit;
321: measurement data file;
322: classification model;
2200: computer;
2201: DVD-ROM;
2210: host controller;
2212: CPU;
2214: RAM;
2216: graphics controller;
2218: display device;
2220: input/output controller;
2222: communication interface;
2224: hard disk drive;
2226: DVD-ROM drive;
2230: ROM;
2240: input/output chip; and
2242: keyboard.

## Claims

1. An apparatus comprising:
an acquisition unit which acquires measurement data indicating a state of a target;
a supply unit which supplies the measurement data acquired by the acquisition unit to a plurality of classification models respectively learned by learning data, which includes measurement data in a period in which the state of the target is normal, for periods different from each other, the plurality of classification models classifying measurement data as either normal or abnormal in response to the measurement data being input; and
a determination unit which determines the state of the target as either normal or abnormal based on a plurality of classification results output from the plurality of classification models.

2. The apparatus according to claim 1, further comprising a learning processing unit which generates, in each period in which the state of the target is normal, a new classification model to be included in the plurality of classification models by learning processing using learning data including measurement data in the period acquired by the acquisition unit.

3. The apparatus according to claim 1, further comprising a selection unit which selects the plurality of classification models from two or more classification models respectively learned by learning data, which includes measurement data in a period in which the state of the target is normal, for periods different from each other, the two or more classification models classifying measurement data as either normal or abnormal in response to the measurement data being input.

4. The apparatus according to claim 3, wherein the selection unit selects, as at least one of the plurality of classification models, at least one classification model learned by learning data including measurement data in a most recent period.

5. The apparatus according to claim 3, wherein the selection unit selects, as at least one of the plurality of classification models, at least one classification model designated by an operator among the two or more classification models.

6. The apparatus according to claim 1, wherein the determination unit determines the state of the target as either normal or abnormal by taking a logical product of the plurality of classification results.

7. The apparatus according to claim 1, wherein the determination unit determines the state of the target as either normal or abnormal by making a majority decision of the plurality of classification results.

8. The apparatus according to claim 7, wherein the determination unit determines the state of the target as either normal or abnormal by adding a larger weight to a classification result of a classification model learned by learning data including measurement data in a more recent period among the plurality of classification models, and making a weighted majority decision of the plurality of classification results.

9. The apparatus according to claim 1, further comprising a decision unit which decides a severity of an abnormal state of the target, based on a number of at least one time of consecutive determination that the state of the target is abnormal.

10. The apparatus according to claim 9, further comprising a setting unit which sets, as measurement data to be included in new learning data, any one of measurement data in a period in which the severity decided by the decision unit is lower than a reference severity among the measurement data in each period acquired by the acquisition unit and supplied from the supply unit to the plurality of classification models, or measurement data obtained by excluding each piece of measurement data, which has caused consecutive abnormality determination until the severity decided by the decision unit reaches the reference severity, and each piece of measurement data, which is subsequent to the each piece of measurement data, which has caused consecutive abnormality determination until the severity reaches the reference severity, and has caused consecutive abnormality determination, among the measurement data acquired by the acquisition unit and supplied from the supply unit to the plurality of classification models.

11. A method comprising:
acquiring measurement data indicating a state of a target;
supplying the measurement data acquired in the acquiring to a plurality of classification models respectively learned by learning data, which includes measurement data in a period in which the state of the target is normal, for periods different from each other, the plurality of classification models classifying measurement data as either normal or abnormal in response to the measurement data being input; and
determining the state of the target as either normal or abnormal based on a plurality of classification results output from the plurality of classification models.

12. A program which causes a computer to function as:
an acquisition unit which acquires measurement data indicating a state of a target;
a supply unit which supplies the measurement data acquired by the acquisition unit to a plurality of classification models respectively learned by learning data, which includes measurement data in a period in which the state of the target is normal, for periods different from each other, the plurality of classification models classifying measurement data as either normal or abnormal in response to the measurement data being input; and
a determination unit which determines the state of the target as either normal or abnormal based on a plurality of classification results output from the plurality of classification models.
